# EUROPEAN PATENT SPECIFICATION

(11) **EP 3 653 102 B1**
(45) Date of publication and mention of the grant of the patent: **09.02.2022**
(21) Application number: 19197098.7
(22) Date of filing: 12.09.2019
(51) Int. Cl.: A47L 17/08, A47L 13/19, A47L 13/17

(54) **VEGETABLE FIBER SPONGE FOR DOMESTIC USE**
PFLANZENFASERSCHWAMM FÜR HEIMGEBRAUCH
ÉPONGE DE FIBRE VÉGÉTALE POUR UTILISATION DOMESTIQUE

(30) Priority: 19.11.2018 ES 201831779 U
(43) Date of publication of application: 20.05.2020
(73) Proprietor: Mascato Esperón, Juan Carlos, 36659 Pontevedra (ES)
(72) Inventor: Mascato, Juan Carlos, 36659 Caldas de Reis (ES)
(74) Representative: Izquierdo Blanco, Maria Alicia

(56) References cited:
- EP-A1- 2 630 945
- KR-A- 20090 067 625
- US-A- 4 674 237
- US-A1- 2002 017 310
- US-A1- 2010 087 117
- US-B1- 6 510 577

## Description

### Field of the invention

This invention concerns a vegetable fiber sponge for domestic use, and more particularly, for cleaning and/or rubbing domestic surfaces or dishes.

### State of the prior art

At present and as a reference to the state of the art, the use of synthetic sponges and vegetable sponges composed of chemical products is common and known. However, these types of sponges are harmful to both the environment and the skin due to the chemicals they contain. These types of sponges leave harmful residues in the skin since they are manufactured from petroleum derivatives. In use, the synthetic sponges release microplastics that, given their size, cannot be filtered by conventional treatment plants, and consequently these microplastics can be ingested by people. In addition, they are produced industrially and usually by machines that consume a large amount of energy, in many cases, non-renewable. Additionally, these types of sponges are composed of fibers that retain dirt and accumulate a lot of water inside, which generates more bacteria by retaining remnants of food, for example after cleaning dirty dishes and also taking excessive drying time, leading to a proliferation of unwanted bacteria and germs.

The use of sponges produced from cellulose is also widely known. These types of sponges are made with tree cellulose, which entails a large amount of energy and chemical products for the decomposition of wood to enable the extraction of cellulose. Therefore, since they are not composed of biodegradable fibers, they are very polluting for the environment. In addition, due to the properties of cellulose, they have the ability to absorb an excessive amount of water, which makes it difficult to efficiently clean and properly dry surfaces.

On the other hand, there are also sponges with a rubbing band composed of fibers to clean exceptionally dirty surfaces. However, both food and dirt or other remains can get trapped within this fiber band. Additionally, one side of the sponge is used for scrubbing while the other side of the sponge is used for wiping, which requires alternating surfaces for proper and effective cleaning, being uncomfortable for the user. There are also other sponges composed of other types of plant fibers. However, these sponges are excessively compact and are made of different layers of fiber sewn together, a system that retains dirt between the different layers promoting the growth of bacteria and which has hydrophilic properties which absorbs excess water promoting the appearance of unwanted bacteria.

A combination of a vegetable sponge obtained from the dried fruit of a plant of the family Cucurbitaceae of the genus "Luffa" with surfactant and / or cosmetic substances is disclosed by EP2630945 A1.

### Explanation of the invention and its advantages

Against this state of affairs, the present invention refers to a vegetable fiber sponge for domestic use that is a cylindrical body permanently attached at its ends and that has at least three interior cavities consisting of compact and tangled plant fibers randomly linked together, which have a thickness of between 0.015 mm and 0.1 0 mm and have a separation between 0.10 millimeters and 0.35 millimeters.

Thanks to its cylindrical configuration joined at the ends, a non-excessive absorption of water is possible allowing a good drainage of the same through the internal cavities and preventing excess moisture inside the sponge and ensuring its asepsis.

Another advantage of this arrangement is that, being composed of vegetable fibers, it has hydrophilic properties, allowing quick drying. In addition, since it is not composed of synthetic or chemical fibers from petroleum products, they are biodegradable and compostable and, therefore, are not harmful to the environment or to the skin of the users. On the other hand, since the vegetable fibers are permanently attached at their ends, it makes impossible the insertion of dirt coming from food debris, thus ensuring asepsis. Additionally, thanks to the internal cavities it is possible to house some type of cleaner such as a soap allowing a greater cleaning of the surface.

Thanks to this arrangement of the compact and entangled plant fibers, it is possible to drain any excess water that is housed inside, thus enabling rapid drying. Likewise, they allow an optimum resistance to the rubbing exerted in its use in the cleaning of dishes and surfaces when the vegetal fibers absorb the water, since in spite of gaining flexibility the robustness of the vegetal fibers is ensured.

Another feature of the invention is that the cylindrical body is compressible.

Thanks to this characteristic, the vegetable fiber sponge recovers its initial form after use, preventing its breakage and having a long service life, thus saving costs.

Another feature of the invention is that the vegetable fibers have a thickness of between 0.015 millimeters and 0.10 millimeters.

Thanks to this thickness value, a vegetable fiber sponge is obtained with a high capacity of surface rubbing for a quick, simple and efficient cleaning, without great effort by the user.

Another feature of the invention is that the vegetable fibers have a separation between 0.10 millimeters and 0.35 millimeters.

Due to this specific magnitude of separation, unwanted penetration of food debris or other dirt inside the plant fiber sponge is prevented, thus preventing the accumulation of bacteria or germs, but allowing the correct drainage of water that has entered inside.

Another peculiarity of the invention is that a cleaning product can be inserted into the internal cavities.

In this manner, when the cleaning liquid is lodged in the interior cavities, a better and effective cleaning of the surface is guaranteed.

### Drawings and references

To better understand the nature of the invention, the attached drawings present an arrangement that is merely illustrative and not limiting.
Figure 1 shows a perspective view of the vegetable fiber sponge (1).
Figure 2 shows a sectional view of the vegetable fiber sponge (1) in which the internal cavities (3) are observed.

The following references are indicated in these figures:
1. Vegetable fiber sponge
2. Cylindrical body
3. Internal cavity
4. Vegetable fiber
5. End

### Exposure of a preferred embodiment

In relation to the drawings and references listed above, a preferred arrangement of the object of the inventions is illustrated in the attached drawings, referred to as a vegetable fiber sponge (1) for domestic use that is a cylindrical body (2) permanently attached at its ends (5) and having at least three internal cavities (3) and consists of compact and tangled plant fibers (4) randomly linked together, which have a thickness of between 0.015 mm and 0.10 mm and have a separation between 0.10 millimeters and 0.35 millimeters.

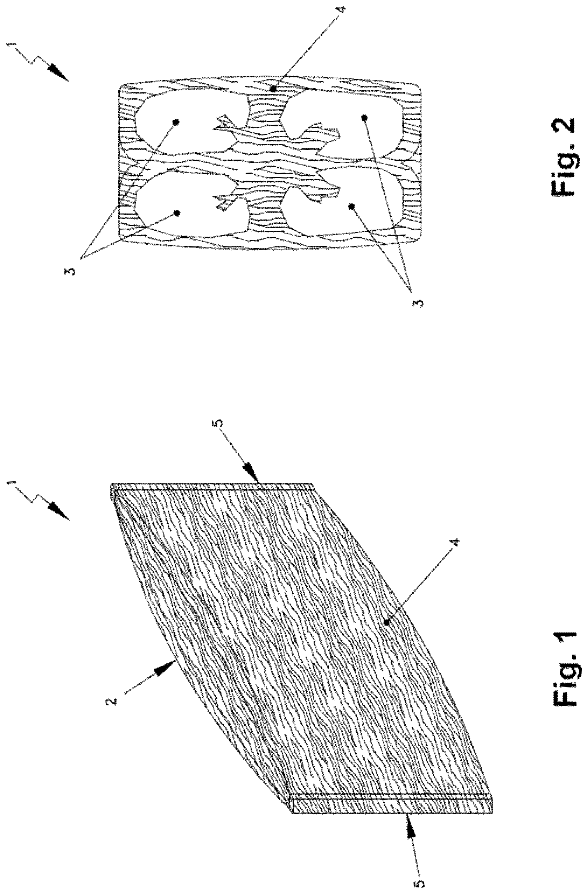

As can be seen in Figure 1, due to this arrangement of the vegetable fibers (4), deep cleaning of the surface is allowed by eliminating all kinds of dirt and fouling quickly, easily and efficiently. Vegetable fibers (4) can be obtained from Luffa or other types of plant fibers. In this manner, since no artificial or chemical additives contain plant fibers (4), they do not contaminate and are therefore not harmful to the environment or the user's skin.

The binding of the vegetable fibers (4) permanently at their ends (5) prevents unwanted penetration of dirt such as food debris inside the vegetable fiber sponge (1). In this manner, unwanted proliferation of germs and bacteria is avoided. The binding of the vegetable fibers (4) can be done by sewing or other permanent binding such as a glue.

On the other hand, as the cylindrical body (2) is compressible, it is possible to adapt the vegetable fiber sponge (1) to any type of surface, recovering its initial shape after use, avoiding breakage and therefore making a sponge of vegetable fiber (1) versatile.

In addition, since the vegetable fibers (4) are between 0.015 millimeters and 0.10 millimeters thick, a large surface scrubbing capacity is obtained, guaranteeing an effective cleaning, without supposing an effort for the user, and ensuring that water can leave the cylindrical body (2).

Additionally, the vegetable fibers (4) have a separation between 0.10 millimeters and 0.35 millimeters, which prevents food debris or other dirt from remaining in the vegetable fibers (4) or penetrating into the inside of the vegetable fiber sponge (1). In this manner, an aseptic vegetable fiber sponge (1) is obtained.

Finally, as seen in Figure 2, and for this specific embodiment, the vegetable fiber sponge (1) has four internal cavities (3) in which a cleaning product can be inserted. Thus, since a cleaning product, which can be liquid or solid, contains an insert, the cylindrical body (2) itself has the appropriate housing for containing the usual cleaning chemical.

Variations in materials, shape, size and arrangement of the component elements, described in a non-limiting manner, do not alter the essence of this invention, and are therefore sufficient to allow for their duplication by an expert.

## Claims

1. Vegetable fiber sponge (1) for domestic use, wherein it is a cylindrical body (2) permanently attached at its ends (5) and that said sponge (1) has at least three internal cavities (3) and is composed of compact and entangled vegetable fibers (4) that are randomly linked together, which have a thickness of between 0.015 mm and 0.10 mm and have a separation between 0.10 millimeters and 0.35 millimeters.

2. Vegetable fiber sponge (1) for home use, according to any of the preceding claims, **characterized in that** the cylindrical body (2) is compressible.

3. Vegetable fiber sponge (1) for home use, according to any of the previous claims, **characterized in that** a cleaning product can be inserted into the internal cavities (3).

## Patentansprüche

1. Schwamm aus Pflanzenfasern (1) für den Hausgebrauch, wobei es sich um einen zylindrischen Körper (2) handelt, der an seinen Enden (5) dauerhaft befestigt ist, und dass der Schwamm (1) mindestens drei innere Hohlräume (3) aufweist und aus kompakten und verschlungenen Pflanzenfasern (4) besteht, die zufällig miteinander verbunden sind und eine Dicke zwischen 0,015 mm und 0,10 mm aufweisen und einen Abstand zwischen 0,10 Millimeter und 0,35 Millimeter haben.

2. Schwamm aus Pflanzenfasern (1) für den Hausgebrauch nach einem der vorhergehenden Ansprüche, **dadurch gekennzeichnet, dass** der zylindrische Körper (2) komprimierbar ist.

3. Schwamm aus Pflanzenfasern (1) für den Hausgebrauch nach einem der vorhergehenden Ansprüche, **dadurch gekennzeichnet, dass** in die inneren Hohlräume (3) ein Reinigungsprodukt einführbar ist.

## Revendications

1. Eponge en fibre végétale (1) à usage domestique, **caractérisée en ce qu'**il s'agit d'un corps cylindrique (2) relié de manière permanente à ses extrémités (5) et **en ce que** ladite éponge (1) comporte au moins trois cavités intérieures (3) et se compose de fibres végétales (4) compactes entremêlées de manière aléatoire entre elles et qui ont une épaisseur comprise entre 0,015 mm et 0,10 mm et ont une séparation entre 0,10 millimètres et 0,35 millimètres.

2. Eponge en fibre végétale (1) à usage domestique selon l'une quelconque des revendications précédentes, **caractérisée en ce que** le corps cylindrique (2) est compressible.

3. Eponge en fibre végétale (1) à usage domestique, selon l'une quelconque des revendications précédentes, **caractérisée en ce qu'un** produit de nettoyage peut être inséré dans les cavités internes (3).
